# EUROPEAN PATENT APPLICATION

(11) **EP 4 811 275 A1**
(43) Date of publication of application: **23.09.2026**
(21) Application number: 25164178.3
(22) Date of filing: 17.03.2025
(51) Int. Cl.: G06T 7/00, G01N 21/88

(54) **METHOD FOR IDENTIFYING A CONDITION OF A SCREEN SURFACE OF AN ELECTRONIC DEVICE**

(71) Applicant: Wallbid Limited, London N3 1XW (GB)
(72) Inventor: Stivaktakis, Vasileios, 15234 Chalandri (GR)
(74) Representative: Kouzelis, Dimitrios

(57) **Abstract**

The present invention refers to a computer-implemented method for identifying a condition of a screen surface of an electronic device (10). The method comprises the step of instructing a front-facing imaging device to capture at least two images (90) of the screen surface (110) reflected in a reflective surface (20), in particular a mirror, with at least one different predefined screen background characteristic, the step of receiving the at least two images (90), and processing the at least two images (90) to detect a defect of the screen surface (110).

## Description

The present invention refers to a method for identifying a condition of a screen surface of an electronic device, in particular a mobile electronic device.

Electronic devices, such as smartphones and tablets, have become an integral part of modern life. These devices feature a screen, known also as screen glass, which is susceptible to damage from drops, impacts, and other accidents. The integrity of the screen is crucial for both the functionality and aesthetics of the device.

Insurance companies and device manufacturers frequently need to assess the condition of a screen of an electronic device.

It is thus an object of the present invention to propose a trustworthy, precise and user-friendly method for identifying a condition of a screen surface of an electronic device.

In the following, a computer-implemented method for identifying a condition of a screen surface of an electronic device is proposed.

The computer-implemented method for identifying a condition of a screen, in particular screen surface, of an electronic device comprises the step of instructing a front-facing imaging device to capture an image of the screen surface reflected in a reflective surface, in particular a mirror, receiving the image, and processing the image to detect a defect of the screen surface.

According to an advantageous configuration, the method for identifying a condition of an electronic device comprises the step of instructing a front-facing imaging device to capture at least two, i.e. two or more, images of the screen surface reflected in a reflective surface, in other words, a reflection of the screen surface in a reflective surface, with at least one different predefined screen background characteristic. This means in particular that the background of the screen, in other words the background of the displayed contents, is predefined differently regarding at least one background characteristic. For example, the at least two images may be captured with a different brightness of the screen background. The method further comprises the step of receiving the at least two images and the step of processing the at least two (received) images to detect a defect of the screen surface. The step of receiving the at least two images can also be understood as receiving at least two images of the reflection of the surface screen in a reflective surface that are captured with at least one different predefined background characteristic. The processing of the at least two images may in particular involve comparing the at least two images for detecting a defect of the screen surface. It is noted that one or more defects and/or defect types can be detected by the present method. Further, one or more front-facing imaging devices can be instructed for capturing the at least two images mentioned above. The expression "with a different predefined background characteristic" can also be understood as "with a predefined difference in at least one background characteristic". It means in particular that the at least one background characteristic is of the same type but has different predefined values or features, depending on whether the at least one background characteristic is of quantitative or qualitative nature, respectively, for the at least two images. For example, the at least one background characteristic can be the brightness of the screen. Here, the expression "with at least one different predefined background characteristic" means that each image of the at least two images is captured with a different brightness value for the screen. The at least one different background characteristic advantageously results in a different overall background of the screen and thus different captured images.

Capturing at least two images of the reflected screen with at least one different background characteristic offers several advantages for detecting defects of the screen surface such as e.g. cracks. Different background characteristics can make certain types of defects more visible. For example, a crack might be more noticeable against a light background than a dark one, or vice versa. By basing the detection on at least two images of the reflected screen differing in at least one background characteristic, actual defects can be distinguished from artifacts that may appear in only one image due to lighting conditions or reflections. Thus, false positives can be reduced. Further, some defects may be more visible with certain background characteristics. Using different backgrounds of the screen for capturing the at least two images increases the likelihood of detecting a wider range of defect types. In addition, a difference in at least one screen background characteristic for the at least two images may help reveal the depth or severity of a defect by how it interacts with the at least one background characteristic. Different backgrounds can also help mitigate the effects of glare or reflections that might obscure defects in a single image. The detection of a screen defect based on at least two images of the screen with at least one different background characteristic may also enhance the flexibility of the method, as it can work effectively across different types of screens that interact different with falling light. Moreover, capturing two or more images provides more data points for analysis that can contribute to more accurate defect detection. Thus, in general, the method can provide a more robust and reliable assessment of the screen surface condition.

The reflective surface is advantageously a mirror. A mirror has a high reflectivity, thus ensuring that the reflected image of the screen of the electronic device is bright and clear, maximizing the visibility of potential defects. Further, mirrors provide a consistent and uniform reflection across their entire surface. This uniformity contributes to the increase of accuracy of defect detection, as it eliminates variations that could be mistaken for screen damage. In general, mirrors introduce very little distortion to the reflected image. In addition, most mirrors provide a flat reflecting surface, which helps maintain the geometry of the reflected image. This simplifies the processing of the images. Moreover, mirrors generally do not add a colour tint to the reflected image, what helps with the detection of defects of the screen surface. Apart from these advantages that directly influence the quality of the reflected image, using a mirror as a reflective surface provides further results on the user's end. In particular, mirrors are ubiquitous in households and businesses, making them a practical choice for a widely accessible method. Mirrors can be easily cleaned to remove smudges or dust, which could otherwise interfere with the reflection quality, and come in various sizes, allowing users to choose an appropriately sized reflective surface for their electronic device. Lastly, most users are familiar with how mirrors work and how to position objects to see their reflection, which can lead to a more intuitive and successful use of the defect detection method.

However, any other type of reflective surface can be used provided it offers sufficient reflectivity and clarity for capturing usable images of the screen surface. Such reflective surfaces can for example be polished metal surfaces (e.g., stainless steel, aluminium), glass windows or doors, screens of other devices (e.g., TV, computer monitor), polished stone surfaces (e.g., marble, granite countertops), reflective plastic surfaces, ceramic tiles, chromed surfaces, reflective building facades (e.g., glass buildings), polished car surfaces, car windows, and reflective tabletops or furniture surfaces.

Within the context of the present disclosure, a screen can also be understood as screen glass and therefore, the screen surface can also be understood as a surface of the screen glass. However, it is noted that the term "screen glass" does not imply that the screen is made of glass but rather refers to the transparent or translucent protective layer covering the display components of the electronic device while allowing visible light to pass through, thereby enabling users to view and interact with the interface of the electronic device. This layer can be made of various materials, including but not limited to glass (e.g., tempered glass, Gorilla Glass), plastic polymers (e.g., polycarbonate, acrylic), sapphire crystal and hybrid materials combining glass and plastic.

In particular, the method comprises the step of detecting a defect in/of the screen surface. The detection may advantageously be done by a condition-based algorithm and/or a classification algorithm, in particular a neural network.

The front-facing imaging device may advantageously be integrated in the electronic device. In other words, the front-facing imaging device is part of the electronic device. Alternatively, the front-facing imaging device can be an external imaging device physically or wirelessly connected to the electronic device. The external imaging device is configured to communicate with the electronic device. If the electronic device has an integrated front-facing imaging device, the method can be set up such that only the integrated front-facing device can be used.

The term "front-facing imaging device" means in particular that the imaging device is arranged such that it can capture a reflection of the screen when the electronic device is placed in front of a reflective surface such that its screen faces the reflective surface. In particular, the front-facing imaging device is arranged on a front side of the electronic device, which is the side of the electronic device, on which the screen is arranged. In other words, the imaging device and the screen are arranged on the same side of the electronic device. The front-facing imaging device" is in particular positioned to face the user when the electronic device is in a normal usage position. The front-facing imaging device can in particular be used for capturing selfies or conducting video calls.

The imaging device can preferably be a camera (digital camera), a CCD sensor, a CMOS sensor, a time-of-flight sensor, a light field sensor or any other type of imaging device that can capture visual information that can be processed as an image.

It is understood that all the aforementioned steps are executed by a processing means/data processing means or processing system/data processing system. In other words, the aforementioned steps are electronically executed or are computer-implemented steps. The data processing means or data processing system can be or comprise a processor/processing unit, preferably a CPU. It is however possible that the data processing system is or comprises a motherboard comprising a processor/processing unit, particularly a CPU, and/or a microcontroller. The data processing means/system may comprise a separate data processing unit that is configured to carry out a step/sub-step of the method. This can apply to each step/sub-step.

The data processing means/system is advantageously configured to communicate with an operating system of the electronic device. The operating system of the electronic device can in particular connect the data processing means/system and a hardware component of the electronic device. In other words, the data processing means/system can communicate with a hardware component via the operating system.

In particular, the data processing means/system is configured to receive an input signal/data from or send an output signal/data to the electronic device, in particular the operating system and/or a hardware component of the electronic device for executing the steps of the proposed method. For example, in the receiving step, the at least one image is received from the electronic device, in particular from its operating system, by the data processing means/system.

The aforementioned imaging device is a hardware component of the electronic device.

The processing means/data processing means or processing system/data processing system may be realised in the electronic device and/or an external system. In other words, the electronic device and/or the external system may comprise the processing means/data processing means or processing system/data processing system. The external system may for example be a server. For example, the processing step can be executed by the external system.

The defect of the screen surface may in particular comprise a crack, a scratch, a chip or a dent in the screen surface.

Advantageously, the at least one different predefined screen background characteristic may comprise a different predefined screen background colour. This means that the at least two images are captured with different predefined screen background colours. In case of two images being captured, a first image is captured with a first predefined screen background colour and a second image is captured with a second predefined screen background colour different from the first predefined screen background colour.

The term "screen background colour" means a solid background colour, i.e., that all pixels of the screen have the chosen background colour, in particular so that all pixels of the screen have the same source colour in the image.

To this end, the screen (its display contents) may in particular be overlayed with the respective screen background colour.

Advantageously, white and grey, white and green or grey and green can be used for the at least two images. The colour "white" offers high contrast for dark defects, the colour "grey" provides a neutral background that can reveal both light and dark defects, and the colour "green" can be effective for detecting certain types of screen defects due to its position in the colour spectrum. Further, the aforementioned colour combinations help in differentiating between true defects and potential false positives caused by reflections or lighting conditions. The stark difference between the chosen colours (e.g., white and green) can accentuate subtle defects that might be less visible with more similar background colours. In general, the combination of a light colour (white) with either a neutral (grey) or a distinct colour (green) provides a good range for defect detection.

It is also possible that other colour combinations than white and grey, grey and green, and white and green are used for the at least two images.

Advantageously, the set of the screen background colours used for capturing the at least two images can include at least one colour from each of the following ranges (using HSL model):
- High Lightness: lightness equal to or higher than 95%
- Medium Lightness: lightness between 45% and 55%

Advantageously, the set of the screen background colours can include at least one colour may have a contrast ratio of 3.5:1 or greater.

Advantageously, each pair of colours in the set may have a ΔE value of at least 30.

Advantageously, the set of the screen background colours used for capturing the at least two images may include at least one colour with saturation equal to or larger than 90% and at least one colour with saturation lower than 10%.

Additionally or alternatively, the at least one different predefined screen background characteristic may advantageously comprise a different predefined screen background colour gradient.

Additionally or alternatively, the at least one different predefined screen background characteristic may advantageously comprise a different predefined screen background brightness. The background brightness may be predefined to be lower than 100%, preferably lower than 50%, more preferably of equal to 30%. Using a lower brightness level (below 100%, preferably below 50%, and optimally at 30%) reduces screen glare and reflections, thereby making screen surface defects more visible. A lower brightness setting may enhance contrast for certain types of defects, making them easier to be detected. The reduced brightness also helps conserve device battery power during the process.

Additionally or alternatively, the at least one different predefined screen background characteristic may advantageously comprise a different predefined screen background contrast. Varying screen background contrast levels between the captures of the at least two images can reveal defects that may be more visible under high or low contrast conditions, enhancing the detection of both subtle and pronounced screen defects.

Additionally or alternatively, the at least one different predefined screen background characteristic may comprise a different predefined screen background pattern (e.g., stripes, dots, grids). Using screen background patterns can help identify defects in the screen surface, as defects may disrupt the uniformity of the different patterns in a different manner, making thus it easier to detect them precisely.

Additionally or alternatively, the at least one different predefined screen background characteristic may comprise a predefined screen background simulated material texture (e.g., wood grain, fabric, metal). Different simulated background textures can interact uniquely with different types of screen defects, thereby potentially highlighting issues that might not be detectable with a screen background without a texture.

Additionally or alternatively, the at least one different predefined screen background characteristic may comprise a predefined noise pattern (e.g., film grain effect). Different noise patterns can be particularly effective in revealing subtle screen defects by creating a complex background that interacts with subtle screen defects in different ways, thereby making them more noticeable during image processing.

Additionally or alternatively, the at least one different predefined screen background characteristic may comprise a different predefined geometric shape. Geometric shapes, in particular with well-defined edges, can help detect screen areas with reduced clarity or responsiveness, as any distortion or blurring of the shape, in particular of its edges, may indicate a defect in that specific region of the screen.

If the at least one different predefined screen background characteristic comprises a different predefined screen background colour gradient and/or a different predefined screen background pattern and/or a predefined screen background simulated material texture and/or a a predefined noise pattern and/or a different predefined geometric shape, it is advantageous if the at least two images are captured with the same screen background colour. For example, if the at least two images are to be captured with different predefined screen background patterns, it is advantageous if the at least two images are captured with the same screen background colour, e.g. white.

It is understood that in case of instructing the front-facing imaging device to capture the at least two images of the screen surface reflected in the reflective surface with two or more different predefined screen background characteristics the two or more different predefined screen background characteristics are chosen such that the resulting backgrounds of the screen for the at least two images are different from each other.

Advantageously, the front-facing imaging device is instructed to capture the at least two images with at least one different predefined screen background characteristic while maintaining at least one (one or more) other predefined screen background characteristic constant. Similarly, the at least one further different predefined screen background characteristic may comprise a different predefined screen background colour and/or a different predefined screen background colour gradient and/or a different predefined screen background brightness and/or a different predefined screen background contrast and/or a different predefined screen background pattern (e.g., stripes, dots, grids) and/or a predefined screen background simulated material texture (e.g., wood grain, fabric, metal) and/or a predefined noise pattern (e.g., film grain effect) and/or a different predefined geometric shape. For example, the at least two images can be captured with the same brightness (brightness value) and different background colours. Varying at least one background characteristic while maintaining at least one other background characteristic constant can result in a more efficient defect detection in the screen surface.

According to an advantageous configuration, the at least one different screen background characteristic comprises the background colour of the screen and the at least one other predefined screen background characteristic that is maintained constant is the background brightness of the screen. In other words, the front-facing imaging device is according to the advantageous configuration instructed to capture the at least two images with different background colours of the screen, while maintaining the background brightness (background brightness value) of the screen constant, i.e., with different background colours and the same background brightness of the screen.

Varying background colour while maintaining constant brightness isolates the effect of colour on defect visibility, thereby increasing the possibility of revealing defects that are more apparent with certain colours. Maintaining constant brightness reduces the impact of ambient light variations on the defect detection process. It allows for better comparison between images, as the overall luminance remains consistent while only the colour changes. In other words, the application of different background colours ensures that the screen is tested under varying lighting conditions, which can help reveal cracks not visible under standard lighting. The different colours provide contrasting backgrounds that can highlight different kinds of cracks. This approach can be particularly effective for detecting subtle cracks or scratches that may be more visible against certain background colours.

According to an advantageous configuration, the at least two images comprise three images, wherein the background brightness is lower than 100%, preferably lower than 50%, more preferably of equal to 30%, and the background colours of the three images are white, grey and green. In other words, the step of instructing a front-facing imaging device to capture at least two images of the screen surface reflected in a reflective surface, in particular a mirror, with at least one different predefined screen background characteristic comprises or can be understood as instructing a front-facing imaging device to capture three images of the screen surface reflected in a reflective surface, in particular a mirror, with the same background brightness, wherein the background brightness is lower than 100%, preferably lower than 50%, more preferably of equal to 30%, and wherein the first image of the three images is captured with white as the screen background colour, the second image of the three images is captured with grey as the screen background colour, and the third image of the three images is captured with green as the screen background colour. This configuration benefits from the above-mentioned advantages regarding screen background brightness and said screen background colours. It is also possible that other colour combinations can be used for the three images. The set of colours for the screen background may advantageously include one colour with lightness equal to or higher than 95%, two colours with lightness between 45% and 55%, wherein at least one colour has saturation equal to or higher than 90% and at least one colours with saturation lower than 10%. Additionally, at least one pair of colours in the set may advantageously have a contrast ratio of 3.5:1 or greater. Advantageously, each pair of colours may have a ΔE value of at least 30.

Advantageously, the method may further comprise the step of instructing (by the data processing means/system) the presentation of a random code on the screen. In particular, the random code is presented in a bounding box (first bounding box) overlayed on the screen, in particular in the middle of the bounding box.

Advantageously, capturing of the at least two images is automatically instructed in response to/upon at least one condition being met.

The at least one condition mentioned above may advantageously comprise detection of the random code in the feed of the screen. In other words, capturing of the at least two images may be automatically instructed in response to/upon detecting the random code in the feed of the screen. It is understood that the code is of such difficulty that is can be considered as unguessable.

This sophisticated procedure establishes a unique and secure link between the test session and the specific electronic device at the precise moment of testing, significantly enhancing the overall security and integrity of the defect detection process. By generating and displaying a random code on the screen of the electronic device, the method creates a temporal and device-specific identifier that is virtually impossible to replicate or predict. This approach effectively eliminates the possibility of fraudulent attempts to manipulate the system, as users cannot employ the screen of another device or pre-recorded images to deceive the detection step for detecting the code. The dual-layer authentication - combining the physical presence of the electronic device with the dynamic, software-generated random code - creates a robust barrier against various forms of spoofing or replay attacks. Moreover, the procedure serves as an implicit confirmation of the correct usage of the application. The user experience (UX) design plays a crucial role in this aspect, with a predefined size and position of the random code on the screen. These design elements ensure that the electronic device is held at the optimal distance from the reflective surface and that the screen surface is properly oriented towards the reflective surface. This UX design not only guides the user to cause the front-facing imaging device to capture high-quality images but also acts as a mechanism to verify proper application usage.

The combination of the random code and the specific UX requirements creates a multi-faceted verification system. It ensures that the images being captured are not only of the intended device but are also taken under the correct conditions for accurate defect detection. This comprehensive approach significantly reduces the likelihood of false positives or negatives that might arise from improper device positioning or attempts to use pre-existing images.

Advantageously, the method may further comprise overlaying a bounding box on the screen.

The at least one condition mentioned above may advantageously comprise determining that the reflection of the electronic device in the reflective surface is placed within the bounding box (second bounding box) reflected in the reflective surface. In other words, capturing of the at least two images may be automatically instructed in response to/upon determining that the reflection of the electronic device in the reflective surface is placed within the bounding box (second bounding box) reflected in the reflective surface. It is understood that due to the fact that the front-imaging device is on and held in front of the reflecting surface, the electronic device appears/is reflected in the reflective surface multiple times. Given that, the expression "determining that the reflection of the electronic device in the reflective surface is placed within the bounding box" can be understood as "determining that the reflection of the electronic device shown in the feed of the reflection of the electronic device/in the reflected feed of the electronic device in the reflective surface is placed within the bounding box". In other words, this expression can be formulated as determining that the second reflection of the electronic device in the reflective surface is placed inside the bounding box.

As mentioned above, capturing of the at least two images may be advantageously automatically instructed in response to/upon at least one condition being met. It is, however, also possible that the capturing of the at least two images can be instructed in response to/upon receiving a corresponding user input and in response to/upon detecting the random code in the feed of the screen. For example, the user input may be the pressing of a button that has the function of capturing an image. For example, in a mobile phone, the shutter button or a button for changing the volume can be configured to capture an image, when pressed. Though the described manual way may be easily applicable in some scenarios, e.g. when an external front-facing imaging device is used, the automatic instruction enhances user convenience as the user is not tasked with a further action. Further, it may reduce fraud margins.

It is understood that, in the case where the least one condition in response to/upon which capturing the at least two images is automatically instructed comprises determining that the reflection of the electronic device in the reflective surface is placed within the bounding box (second bounding box) reflected in the reflective surface, checking if the entire screen of the electronic device is visible in each of the at least two images constitutes an additional check.

Advantageously, after the detection of the random code, the random code is removed from the screen, and then the at least two images are captured with the different background characteristic. For example, the background characteristic may be the background colour of the screen, while two images are to be captured. After the detection of the random code, the random code is removed from the screen and a first image is captured with a first background colour. To this end, a first background colour is displayed/overlayed on the screen and then the first image is captured. Then, a second image is captured with a second background colour. For the purpose of capturing said second image, a second background colour is displayed/overlayed on the screen and then the second image is captured.

Advantageously, the method may further comprise the steps of overlaying a bounding box on the screen and instructing the user to position the electronic device in front of the reflective surface such that the reflection of the electronic device in the reflective surface is placed within the bounding box (also) reflected in the reflective surface. The bounding box is in particular a predefined bounding box.

This approach allows for consistent positioning of the electronic device relative to the reflective surface, leading to more standardized image capture across different users and devices. Further, this approach significantly improves the quality and reliability of captured images by guiding users to achieve optimal framing and distance from the reflective surface, thereby reducing user error and minimizing the need for retakes. The bounding box serves as a known reference point in the captured images, facilitating easier and more accurate image processing while ensuring the entire screen surface is visible, thus improving the comprehensiveness of defect detection. This visual guidance simplifies the user experience and increases the likelihood of capturing high-quality images on the first attempt, saving time and computational resources. Furthermore, it allows for more precise calibration of image analysis algorithms, as the position and size of the screen within the image become more predictable. The method enhances the ability to detect edge-to-edge defects and, when combined with other authentication methods, can serve as an additional visual cue to verify the correct device is being imaged. It also improves the consistency of lighting and reflection conditions across different image captures, leading to more reliable defect detection. The known size of the bounding box enables more accurate scaling and measurement of detected defects. Overall, this feature significantly enhances the standardization, accuracy, and efficiency of the screen defect detection process, providing a robust foundation for comprehensive and reliable screen analysis.

It is noted that the first bounding box and second bounding box may advantageously be the same bounding box. In other words, a single bounding box can advantageously be overlayed on the screen of the electronic device.

Advantageously, the at least two images may be cropped to an area, in particular the whole area, within the bounding box before processing them to detect a defect of the screen surface. In other words, the method may advantageously comprise the step of cropping the at least two images to an area, in particular the whole area, within bounding box before the step of processing takes place. This ensures that only the necessary part of each image is used for the analysis, maintaining the user's privacy by not capturing or storing unnecessary background details from the user's environment. Thus, the method reduces the risk of capturing and processing sensitive information that might be visible in the background of the received images. Further, the cropping step achieves an improved processing efficiency, as it reduces the amount of data that needs to be processed. This can significantly decrease computational time and resource usage, especially when dealing with high-resolution images or large volumes of data. Cropped images require less storage space and bandwidth for transmission, which can be beneficial for cloud-based processing or when storing large numbers of images. Further, concentrating on the specific area within the bounding box eliminates potential distractions or irrelevant information in the surrounding image areas. This focused approach can lead to more accurate defect detection by reducing the likelihood of false positives from elements outside the screen surface area in the images. In particular, the influence of varying backgrounds or environmental conditions that might be present in the uncropped portions of the images can be minimized. This isolation can lead to more robust and consistent defect detection results.

Advantageously, the step of processing the at least two images may comprise the sub-step of classifying, in particular by using a classification algorithm, each image of the at least two images as containing an intact screen or a damaged screen or as being inconclusive. The classification algorithm may advantageously be a neural network, in particular a convolutional neural network. It is further understood that the previously mentioned detection of a defect is an inherent part of the classifying sub-step.

Advantageously, a screen or screen surface may be identified as damaged if at least one image of the at least two images is classified as containing a damaged screen/screen surface. For more accurate results, a screen or screen surface may be identified as damaged if all the images of the at least two images are classified as containing a damaged screen/screen surface. A screen or screen surface may advantageously be identified as intact, if at least one image of the at least two images is classified as containing an intact screen/screen surface, and there is no image classified as containing a damaged screen/screen surface, even if one image is classified as inconclusive. The condition of the screen or screen surface may advantageously be identified as inconclusive, if all images are classified as inconclusive.

In the following, the case of classifying an image as inconclusive is further explained. The accuracy of the classification depends on the training and testing of the network. In other words, in the optimal case where the neural network is trained with images of all possible defects and its variations, in particular with all variations of cracked and not cracked screens, the classification would be 100% accurate in detecting defects, in particular in detecting cracks or for example distinguishing them from scratches. In the opposite case, the response of the neural network regarding the classification of an image might be scored with a low confidence by the network itself. In this case, the image is classified as inconclusive.

According to an advantageous configuration, the following principle is applied for identifying the condition of the screen or screen surface. In particular, if at least one image of the at least two images is identified as containing a damaged screen/screen surface, the screen or screen surface is identified as damaged. If at least one image of the at least two images is identified as containing an intact screen/screen surface, and there is no image classified as containing a damaged screen/screen surface, even if one is classified as inconclusive, the screen or screen surface is identified as intact.

This can also be described as follows:
Each result from the classification model (PASSED, FAILED, or UNKNOWN) is considered as a "vote" for the screen condition. The final decision-making process is based on the following logic.
- If there is at least one FAILED vote, FAILED is returned.
- If there is at least one PASSED vote and no FAILED vote, PASSED is returned.
- If all votes are UNKNOWN, the decision is UNKNOWN.

The vote "passed" corresponds to the case where an image is classified as containing an intact screen/screen surface. The vote "failed" corresponds to the case where an image is classified as containing a damaged screen/screen surface. The vote "unknown" corresponds to the case where an image is classified as inconclusive, i.e., where the condition of the screen/screen surface is identified as inconclusive.

The proposed classification has the advantages of result unification, decision stability and reliability. When there are multiple predictions for the screen, the method combines the votes to reach a unified decision. The method is designed to handle cases of ambiguity, providing the UNKNOWN result when the condition cannot be determined with certainty. The proposed approach improves reliability, reducing the likelihood of wrong decisions due to individual uncertain votes.

Advantageously, the method may further comprise the step of checking, in particular by using segmentation and/or object detection algorithms, if the entire screen of the electronic device is visible in each of the at least two images, and/or there are no obstacles hiding any part of the screen of the electronic device in each of the at least two images. By "visible", it is particularly meant that a screen surface area is 100% inside the bounding box. By "no obstacles", it is particularly meant that it is checked if the user - either on purpose or by accident - has placed an object in front of the screen/screen surface.

In segmentation, the at least two images are advantageously processed such that the screen area is extracted as a binary mask where pixels belong either to the "screen" class or the "background" class. The mask-result of the segmentation is processed to identify valid contours and reject false positives.

The contours can advantageously be evaluated based on the following criteria:
- Area: The area is larger than 49000 pixels to be considered valid.
- Position in the Image (boundary check): Contours touching the image boundaries are considered excluded.
- Aspect ratio: Only contours with aspect ratios from 0.5 to 1.5 are allowed to ensure the geometry of the screen.
- Compactness ratio: contours with a compactness ratio below 0.7 are rejected.

If no valid contour is found, the system returns a failure reason:
- "NO_DEVICE": No device detected in an image.
- "BLOCKED": The contour is rejected due to contact with the boundaries or some occlusion that ruins the compactness ratio.

At this point, further quality checks may be applied. These checks may in particular fall under the later mentioned check if each of the at least two images, meet predetermined quality standards. Specifically, the segmentation result is evaluated based on a minimum fill ratio. In particular, the ratio of the contour area to the area of the bounding box of the screen region may be calculated. If the value is less than the minimum fill ratio, the image can be rejected with the reason "BLOCKED". Finally, valid contours can undergo flood filling to eliminate isolated empty areas, optimizing any discontinuities in the segmentation result.

In the classification step described above, the screen area of each image of the at least two images may advantageously be extracted based on the respective image and the mask provided by the segmentation. This area is given as input to the classifier, which in turn gives the screen condition based on a threshold. Specifically, the classifier result can advantageously be interpreted as follows:
- FAILED: for a value below 0.8
- PASSED: for a value above 0.85
- UNKNOWN: for a value between 0.8 and 0.85

Advantageously, the method may further comprise the step of checking if each of the at least two images, meet predetermined quality standards, in particular wherein the predetermined quality standards comprise a predetermined resolution and/or predetermined lighting conditions and/or absence of glares and/or reflections. The check if each of the at least two images meet predetermined lighting conditions corresponds to the later described lightning check with reference to the figures. Each of these checks for checking if each of the at least two images meet a predetermined resolution and/or predetermined lightning conditions and/or the condition of absence of glares and/reflections can be executed before or after the checking if the screen is visible in each of the at least two images, and/or if there are no obstacles hiding any part of the screen of the electronic device in each of the at least two images.

Advantageously, the classification step may take place only if the entire screen of the electronic device is visible in each of the at least two images and/or there are no obstacles hiding any part of the screen of the electronic device in each of the at least two images and/or the at least two images meet the predetermined standards. This conditional approach offers numerous significant advantages that enhance the overall effectiveness and reliability of the screen defect detection process. By proceeding with the classification step only when specific criteria are met, the method guarantees that analysis is based on complete and high-quality images, significantly improving the reliability of results and reducing the risk of false positives and negatives. This approach optimizes resource utilization by filtering out suboptimal images before the computationally intensive classification stage, thereby enhancing system efficiency. It also positively impacts the user experience by encouraging the capture of high-quality, unobstructed images, which in turn leads to more successful defect detection attempts. The standardization of the classification process creates a more uniform dataset for analysis, facilitating more reliable and comparable results across various devices and user environments. This standardized approach serves as a built-in quality control mechanism and improves the scalability of the method across different device models and screen types.

Advantageously, the method may further comprise the step of instructing a user to remove any screen protection films and/or clean the screen surface of the electronic device, wherein said step takes place before the step of instructing a front-facing imaging device to capture at least two images of the screen surface reflected in a reflective surface, in particular a mirror, with at least one different predefined screen background characteristic.

Screen protection films can interfere with the test and may cause a false detection of defects in the screen. Any dirt or debris on the screen can also lead to false negatives. By doing these, the user will improve the accuracy of the detection results. In particular, performing these actions improves image clarity by removing potential obstructions or contaminants that could interfere with accurate defect detection. Removing a screen protection film further ensures that the captured images represent the actual condition of the screen surface, and not of any temporary or removable elements. It also reduces false positives that might be caused by defects of a screen protection film rather than the screen surface itself. Moreover, potential light refraction or refection issues caused by a screen protection film, what could otherwise distort the appearance of the screen surface in captured images, can be eliminated. A more consistent and standardized image capture across different electronic devices, in particular regardless of whether their users have protected them by a screen protection film can be achieved when the user is instructed to perform these actions. Furthermore, superficial marks (e.g., smudges, fingerprints) and actual screen defects can be distinguished from each other. Lastly, the image processing can be simplified due to a reduction of variables and potential sources of error.

The present invention also refers to a computer program product comprising instructions which, when the program is executed by a computer, in particular of an electronic device, cause the computer to carry out the steps of the previously described computer-implemented method for identifying a condition of a screen surface of an (the) electronic device.

The present invention further refers to a computer-readable storage medium comprising instructions which, when executed by a computer, in particular of an electronic device, cause the computer to carry out the steps of the previously described computer-implemented method for identifying a condition of a screen surface of an (the) electronic device.

The electronic device may advantageously be a mobile phone, in particular a smartphone, a tablet, or a smartwatch. However, any electronic device that has a screen and has a front-facing imaging device or can be connected to a front-facing imaging device can be used with the proposed method.

The present invention may further refer to the electronic device or a system comprising the electronic device and the external system previously mentioned.

The described computer-implemented method for identifying a condition of a screen surface of electronic device has numerous potential applications.

This method can be used so that insurers can assess the initial condition of the electronic device when issuing policies and to verify damage claims efficiently in insurance underwriting and claims processing.

Retailers and manufacturers can utilize this method to swiftly and accurately evaluate the condition of electronic devices being traded in or sold back as part of device trade-in and buyback programs.

Companies engaged in device refurbishment can employ this method to verify screen condition before and after the refurbishment process, ensuring quality assurance for refurbished devices.

This method can further be used for determining if screen damage falls under warranty coverage, aiding in warranty validation and enforcement.

Companies offering device rentals or leases can apply this method to assess device condition at the commencement and conclusion of the rental period, supporting rental or leasing programs.

Online marketplaces can integrate this method, allowing sellers to easily verify and demonstrate the condition of devices they are offering for sale on auction or resale platforms.

Businesses can employ this method to regularly assess the condition of company-issued devices and plan for replacements or repairs as needed, enhancing corporate asset management.

This method can provide independent verification of device condition in peer-to-peer sales of used devices, enhancing consumer confidence in second-hand markets.

In particular, the method may advantageously further comprise the step of generating a certificate comprising information about the condition of the screen surface. The certificate can be an insurance or damage certificate. The method may advantageously further comprise the step of outputting the certificate to an external source. The external source may comprise a computer, a computer system or a server.

These and further details, advantages and features of the present invention will be described based on an embodiment of the invention and by taking reference to the accompanying figures.
Figure 1 shows a simplified schematic representation of an electronic device with a screen surface, the condition of which can be identified with the computer-implemented method for identifying a condition of a screen surface of an electronic device according to the present invention.
Figure 2 shows a further simplified schematic representation of the electronic device.
Figure 3 shows a schematic representation of a part of the computer-implemented method according to the embodiment of the present invention.
Figure 4 shows a flowchart referring to the computer-implemented method according to the embodiment of the present invention.

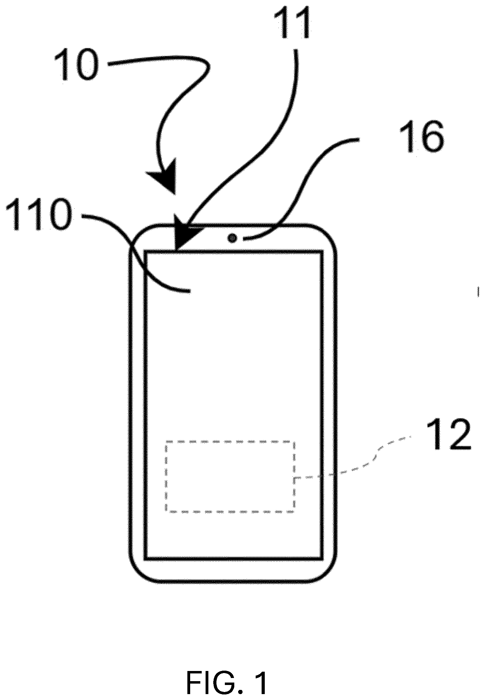

In the following, a computer-implemented method for identifying a condition of a screen surface of an electronic device 10 according to an embodiment of the present invention is described in detail with reference to figures 1 to 4.

As can be seen from figure 1, the electronic device 10 is here a mobile phone, in particular a smartphone. The electronic device 10 has a front-facing imaging device 16, i.e., the front-facing imaging device 16 integrated in the electronic device 10. Alternatively, the front-facing imaging device 16 can be an external imaging device that is physically or wirelessly connectable to the electronic device 10 and configured to communicate with the electronic device 10. This can in particular be useful when an integrated front-facing imaging device 16 is defect. It is, however, understood that using the integrated front-facing imaging device 16 is a more practical option for the user.

The electronic device 10 has further a screen 11 with a screen surface 110, the condition of which can be identified with the computer-implemented method according to the embodiment. The front-facing imaging device 16 is in particular a camera (digital camera) and is arranged on the same side (front side) of the electronic device 10 with the screen 11. Thus, the front-facing device 10 is arranged such that it can capture a reflection of the screen 11 when the electronic device is placed in front of a reflective surface, e.g. a mirror, such that its screen 11 faces the reflective surface.

Though in the present embodiment the electronic device 10 is a mobile phone, the electronic device 10 can for example also be a tablet, a smartwatch, a laptop or any other type of electronic device that has a front-facing imaging device and a screen.

Further, the electronic device 10 has a data processing system 12 that comprises means for carrying out the computer-implemented method according to the embodiment. The data processing system 12 can in particular be realised as a processor/processing unit, preferably a CPU, of the electronic device 10, here the mobile phone. It is however, in particular depending on the type of the electronic device 10, also possible that the data processing system 12 corresponds to a motherboard comprising a processor/processing unit, in particular a CPU, or a microcontroller.

In the following, the computer-implemented method for identifying a condition of the screen surface 110 of the electronic device 10 according to the embodiment is explained. The method can be implemented as an application (software application) that runs on the electronic device 10 by the data processing system 12. The method comprises a step of instructing the front-facing imaging device 16 to capture at least two images of the screen surface 110 reflected in a reflective surface with at least one different predefined screen background characteristic, a step of receiving the at least two images and a step of processing the at least two images to detect a defect of the screen surface. The defect of the screen surface 110 may in particular comprise a crack, a scratch, a chip or a dent in the screen surface. Here, the reflective surface is a mirror as mirrors are ideal reflective surfaces for the implementation of the present method, providing a reliable, accessible, and effective means of capturing high-quality reflected images of the screen surface 110 of the electronic device 10.

In particular, the front-facing imaging device 16 is instructed to capture the at least two images with at least one different predefined screen background characteristic while maintaining at least one other predefined screen background characteristic constant. In the present embodiment, the at least one different screen background characteristic comprises the background colour of the screen 110 (its feed) and the at least one other predefined screen background characteristic that is maintained constant is the background brightness of the screen 110. More specifically, three images are captured, wherein the background brightness is lower than 100%, preferably lower than 50%, more preferably equal to 30%, and the background colours of the three images are white, grey and green.

The method begins with the step of instructing a user to remove any screen protection films and/or clean the screen surface 110 of the electronic device 10. By doing so, the accuracy of the result of the defect detection will be increased, as screen protection films, dirt or debris can interfere with the defect detection and thus lead to a false detection of defects in the screen surface 110, i.e., to false negatives.

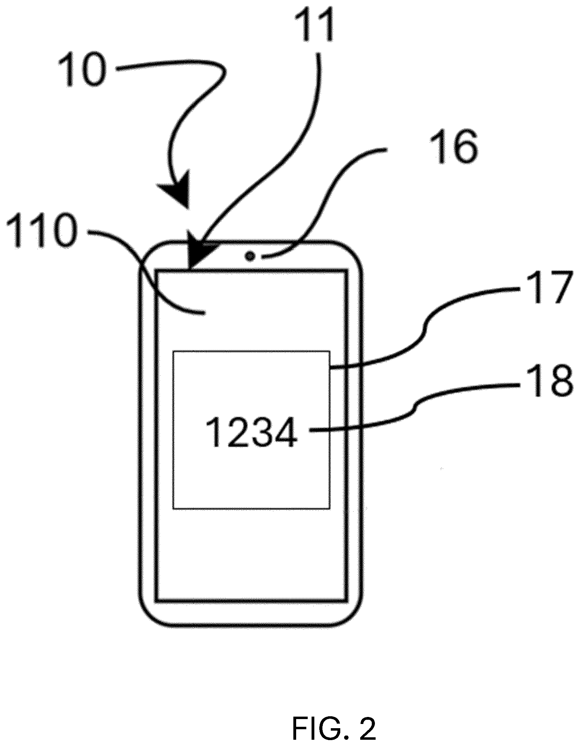

Then, the front-facing imaging device 16 is instructed to be turned on, what results in the feed of the front-facing imaging device 16 to be displayed on the screen 11 of the electronic device 10. Then, an overlay that shows a bounding box 17 with a random code 18 in the middle is rendered on the screen 11. Incoming video frames are processed in order to detect this code 18. The bounding box 17 with the random code 18 in the middle of the bounding box 17 is shown in figure 2. For illustrative purposes, the number "1234" is shown as the random code 18. However, it is understood that a rather lengthy code and/or code with a combination of numbers and/or letters and/or special characters is (randomly) used so that the random code is essentially unguessable. This reduces the risk of fraudulence from the user's side.

Following that, the user is instructed to position the electronic device 10 in front of the reflective surface such that the reflection of the electronic device 10 in the reflective surface is placed within the bounding box 17 reflected in the reflective surface.

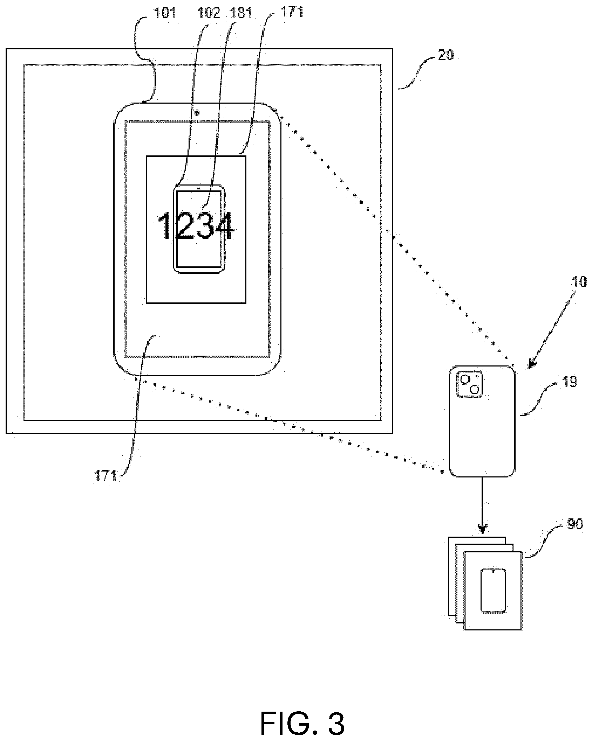

This will be better explained with reference to figure 3.

Figure 3 shows a schematic representation of the situation where the user holds the electronic device 10 in front of the reflective surface 20 formed as a mirror. For illustrative purposes, the user is not depicted in the figure.

As can be seen from the figure, the electronic device 10, here a mobile phone, is held with its front side and thus the screen surface 110 facing the reflective surface 20 and its rear side 19 facing the user.

As the electronic device 10 is held in front of the reflective surface 20, a first reflection 101 of the electronic device 10 is created in the reflective surface 20. Consequently, the screen surface 110, the bounding box 17 and the code 18 are also reflected in the reflective surface 20 resulting in a reflected screen surface 11, a reflected bounding box 171 and a reflected code 181. These reflections of the screen surface 110, the bounding box 17 and the code 18 are characterized also as first reflections of the corresponding elements.

At the same time, a second reflection 102 of the electronic device 10 is created in the reflective surface 20 due to the fact that the front-imaging device 16 is on and its feed is shown on the screen 11 of the electronic device.

The instruction to the user to position the electronic device 10 in front of the reflective surface 20 such that the reflection of the electronic device 10 in the reflective surface 20 is placed within/inside the bounding box 17 reflected in the reflective surface 20 thus means that the second reflection 102 of the electronic device 10 should be positioned inside the reflected bounding box 171.

It is understood that the user most of the times will have to move towards or away from the reflective surface 20, depending on the user's position, so that the correct positioning of the screen 10 is achieved. In figure 3, the state in which the electronic device 10 is correctly placed within the bounding box 17 reflected in the reflective surface 10 is presented.

This procedure binds the method for identifying the condition of the screen surface 110 of the electronic device 10 uniquely to the electronic device 10 at that moment, enhancing security and eliminating fraud as the user cannot use the screen of another device. Additionally, it confirms the correct use of the application since the user experience is designed in such a way (size and position of the random code 18 that ensures that the device screen 11 is facing the reflective surface 20, and it is being held in the correct distance from it.

As soon as the random code 18 is detected, more specifically in response to the detection of the random code 18, by the front-facing imaging device 16, the application automatically begins the image capturing process by instructing the front-facing imaging device 16 correspondingly. By the automatic instruction, user convenience is maximised, and it can be ensured that the images 90 are taken exactly when the conditions are met, without any delay that could allow for manipulation. It is understood that the detection of the random code 18 means detecting the reflected code 181 by the front-facing imaging device 16. For the image capturing process to start, the random code 18 is removed after being detected.

The image capturing process comprises capturing, as previously described, of three images 90 with background brightness of the screen 11 lower than 100%, preferably lower than 50%, more preferably equal to 30%, and the background colours of white, grey and green. The background brightness of the screen 11 is chosen to be the same for all three images 90.

To this end, the colour white is displayed/overlayed on the screen 11 as its background colour and then the first image 90 is captured. Then, the colour grey is overlayed/displayed on the screen 11 as its background ground colour and the second image 90 is captured. Finally, the colour green is overlayed/displayed on the screen 11 and then the third image 90 is captured. It is understood that the order in which the background colours are overlayed on the screen 11 does not play any role.

In order to reduce processing time but also process only the part of the images 90 that are of interest for the detection of defects of the screen surface 110, each of the three images 90 is cropped to the area within the bounding box.

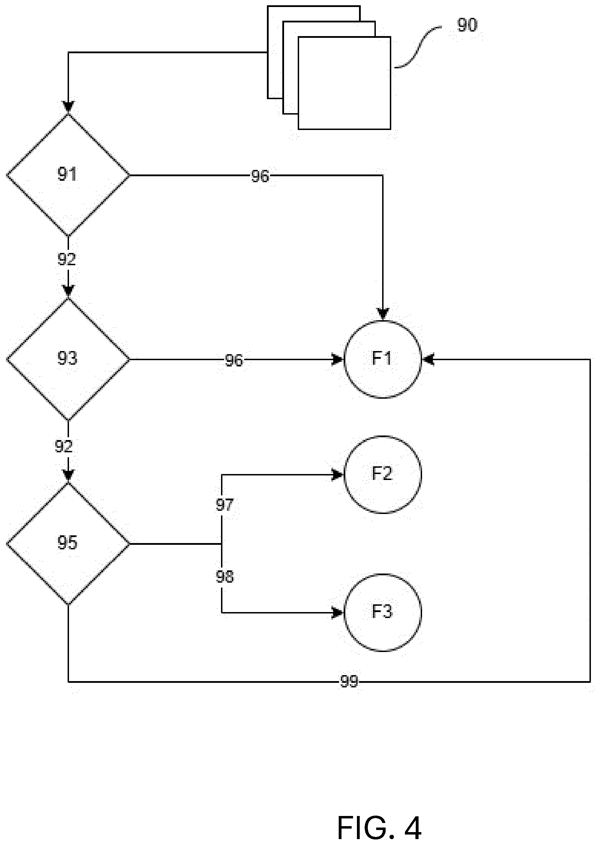

Then, the method proceeds to the processing step, via which defects in the screen surface 90 are detected. This is explained with reference to the flow diagram of figure 4.

More specifically, the step of processing of the three images 90 comprises a check 91. The check 91 comprises a screen presence check. The screen presence check comprises checking if the entire screen 11 of the electronic device is visible in each of the three images 90 and if there are no obstacles hiding any part of the screen 11 of the electronic device 10 (e.g. the user's fingers or another object) in each of the three images 90. This step uses segmentation and/or object detection. Segmentation algorithms are used on the entire set of images 90 for accurately delineating the screen 11 from the rest of the ambient space in the images 90. This ensures that the analysis focuses solely on this area and ensures that any assessment of the screen's integrity is not compromised by partial visibility. On top of that, this ensures that the data used in later steps is valid and representative of the screen's condition.

If this is not the case, i.e. in case of failure 96, the user is notified providing a hint so that the capture process is repeated. This is denoted by operation F1 in the flow diagram of figure 4. For example, the user can be presented with a message on the screen 11 of the type "Please repeat the process making sure there are no fingers covering the screen" or "Please repeat the process making sure that the device is inside the bounding box".

The check 91 may further comprise an image lightning check for checking if the images 90 are dark or oversaturated. In particular, it is checked if the percentage of the dark pixels of an image 90 exceeds 50% or the percentage of the oversaturated pixels exceeds 50%. A dark pixel is in particular a pixel with an intensity lower than 50, while an oversaturated pixel is in particular a pixel with an intensity higher than 240. If any of those criteria is met for an image 90, the image is not processed anymore, i.e., this image is rejected. The processing continues for the rest of the images. Advantageously, the image lightning check may be executed before the screen presence check.

If the result of the screen presence check is a success 92, the method proceeds to a quality check 93. The quality check comprises checking if each of the three images 90 meets predetermined quality standards comprising a predetermined resolution and/or absence of glares and/or reflections. The quality check 93 ensures that the images 90 taken have the required resolution and that no glares/reflections are detected that could impact the defect detection. It is noted that the screen lightning check can be executed as part of the quality check 93 and thus not before but after the screen presence check.

If the result of the quality check is a failure 96, the method proceeds to operation F1. Further, the user is notified that the method cannot continue due to unsuitable conditions and provides clues about the problematic factor so that the user can fix the problem so that new images 90 can be captured.

If the result of the quality check is a success 92, the method proceeds to classification step 95 for classifying each of the images 90 as containing an intact screen 11, a damaged screen 11 or a screen 11 of inconclusive condition. The classification is performed by use of a neural network. If each of the images 90 is classified as containing an intact screen, what is denoted by a first status 97, the method results in quality acceptance F2 of the screen surface 110. If at least one image 90 is classified as containing a damaged screen 11, this is denoted as a second status 98 resulting in quality rejection F3 of the screen surface 110. If the classification is, this is denoted by a third status 99. The latter leads to operation F1, where the user is asked to retry. The screen 11 is identified as damaged if at least one image 90 of the images 90 is classified as damaged with high confidence.

If the classification of the screen 11 is inconclusive, the images 90 can be sent to an external source, in particular to trained personnel that can zoom in or apply other filters to the images and provide the final verdict of the classification. Moreover, these marginal cases can be included in the training dataset so that future similar cases are handled successfully by the neural network.

For the classification of the images 90, lightweight convolutional neural network (CNN) models are trained to detect high-resolution details, including subtle cracks on the screen 11. In particular, the MobileNetv2 was used after having been trained in images of screens with defects out of a synthetic dataset. In particular, it was trained for 200 seasons with a batch size 4, Adam optimizer and the technique ReduceLROnPlateau. However, other models can also be used for classification purposes.

For the segmentation, the UNet++ model was used. It was trained for two classes (screen and background) using pre-trained weights in combination with the images from the created dataset. The dataset was created in Labelbox. It was trained for 100 epochs with a batch size of 6 on an NVIDIA GeForce RTX 4060 card. For training, the Adam optimizer was used, binary Tversky loss as the loss function, and initial learning rate was 5e-4.

Both models, for the segmentation and the classification, were trained using the classic supervised learning method, where training and test images are accompanied by corresponding groundtruth labels. The datasets in both models were divided into train, validation, and test data sets for training, validation, and testing, respectively. Finally, the use of grayscale images was chosen to reduce computational complexity in both segmentation and classification. It is however noted that any other model can be used for these purposes.

### Reference signs

- 10: electronic device
- 11: screen
- 12: data processing system
- 16: front-facing imaging device
- 17: bounding box
- 18: code
- 19: rear side
- 20: reflective surface
- 90: image
- 91: check
- 92: success
- 93: quality check
- 95: classification step
- 96: failure
- 97: first status
- 98: second status
- 99: third status
- 101: first reflection of electronic device
- 102: second reflection of electronic device
- 110: screen surface
- 111: reflected screen surface
- 171: reflected bounding box
- 181: reflected code
- F1: operation
- F2: quality acceptance
- F3: quality rejection

## Claims

1. A computer-implemented method for identifying a condition of a screen surface (110) of an electronic device (10), wherein the method comprises the following steps:
- instructing a front-facing imaging device (16) to capture at least two images of the screen surface (110) reflected in a reflective surface (20), in particular a mirror, with at least one different predefined screen background characteristic,
- receiving the at least two images (90), and
- processing the at least two images (90) to detect a defect of the screen surface (110).

2. The method of claim 1, wherein the front-facing imaging device (16) is integrated in the electronic device (10) or wherein the front-facing imaging device (16) is an external imaging device physically or wirelessly connected to the electronic device.

3. The method of claim 1 or 2, wherein the at least one different predefined screen background characteristic comprises
- a different predefined screen background colour and/or
- a different predefined screen background colour gradient and/or
- a different predefined screen background brightness and/or
- a different predefined screen background contrast and/or
- a different predefined screen background pattern and/or
- a different predefined screen background simulated material texture and/or
- a different predefined noise pattern and/or
- a different predefined geometric shape.

4. The method of any of the preceding claims, wherein the front-facing imaging device (16) is instructed to capture the at least two images (90) with at least one different predefined screen background characteristic while maintaining at least one other predefined screen background characteristic constant.

5. The method of claim 4, wherein the at least one different screen background characteristic comprises the background colour of the screen and the at least one other predefined screen background characteristic that is maintained constant is the background brightness of the screen.

6. The method of claim 5, wherein the at least two images (90) comprise three images (90), wherein the background brightness is lower than 100%, preferably lower than 50%, more preferably equal to 30%, and the background colours of the three images (90) are white, grey and green.

7. The method of any of the preceding claims, wherein capturing of the at least two images (90) is automatically instructed in response to/upon at least one condition being met,
- wherein the method further comprises the step of instructing the presentation of a random code on the screen, in particular in a bounding box overlayed on the screen, in particular in the middle of the bounding box, wherein the at least one condition comprises detection of the random code in the feed of the screen,
and/or
- wherein the method further comprises overlaying a bounding box on the screen, wherein the at least one condition comprises determining that the reflection of the electronic device in the reflective surface (20) is placed within the bounding box reflected in the reflective surface (20).

8. The method of any of the preceding claims, further comprising the steps of:
- overlaying a bounding box on the screen, and
- instructing the user to position the electronic device in front of the reflective surface (20) such that the reflection of the electronic device in the reflective surface (20) is placed within the bounding box reflected in the reflective surface (20).

9. The method claim 7 or 8, wherein the at least two images (90) are cropped to an area within the bounding box before processing them to detect a defect of the screen surface (110).

10. The method of any of the preceding claims, wherein the step of processing the at least two images (90) comprises the sub-step of classifying, in particular by using a classification algorithm, each image as containing an intact screen or a damaged screen or as being inconclusive, in particular wherein the screen (11) is identified as damaged if at least one image of the at least two images (90) is classified as containing a damaged screen and the screen (11) is identified as intact if all images (90) of the at least two images (90) are classified as containing an intact screen.

11. The method of claim 10, wherein the step of processing the at least two images (90) comprises the following sub-steps:
- checking, in particular by using segmentation and/or object detection algorithms, if:
- the entire screen of the electronic device is visible in each of the at least two images (90), and/or
- there are no obstacles hiding any part of the screen of the electronic device in each of the at least two images (90),
and/or
- checking if at each of the at least two images (90), meet predetermined quality standards, in particular wherein the predetermined quality standards comprise a predetermined resolution and/or predetermined lighting conditions and/or absence of glares and/or reflections
wherein the classification sub-step takes place only if the entire screen of the electronic device is visible in each of the at least two images (90) and/or there are no obstacles hiding any part of the screen of the electronic device in each of the at least two images (90) and/or the at least two images (90) meet the predetermined standards.

12. The method of any of the preceding claims, further comprising the step of instructing a user to remove any screen protection films and/or clean the screen surface (110) of the electronic device before the step of instructing a front-facing imaging device (16) to capture at least two images (90) of the screen surface (110) reflected in a reflective surface (20), in particular a mirror, with at least one different predefined screen background characteristic.

13. A data processing system (12) comprising means for carrying out the steps of the method of any of claims 1 to 12.

14. A computer program product comprising instructions which, when the program is executed by a computer, cause the computer to carry out the steps of the method of any of claims 1 to 12.

15. A computer-readable storage medium comprising instructions which, when executed by a computer, cause the computer to carry out the steps of the method of any of claims 1 to 12.
